# EUROPEAN PATENT APPLICATION

(11) **EP 2 166 778 A2**
(43) Date of publication of application: **24.03.2010**
(21) Application number: 09169985.0
(22) Date of filing: 10.09.2009
(51) Int. Cl.: H04Q 9/00

(54) **system and method for acquiring data from an aircraft**

(30) Priority: 19.09.2008 US 234211
(71) Applicant: Honeywell International Inc., Morristown, NJ 07962-2245 (US)
(72) Inventor: Eagleton, Stephen P., Morristown, NJ 07962-2245 (US); Somasundram, Balasubramanian, Morristown, NJ 07962-2245 (US); Bonkra, Sandeep, Morristown, NJ 07962-2245 (US); Pynadath, Renish, Morristown, NJ 07962-2245 (US); Jawa, Manish, Morristown, NJ 07962-2245 (US); Bhattacharjee, Subhasish, Morristown, NJ 07962-2245 (US); Singh, Ajeet, Morristown, NJ 07962-2245 (US)
(74) Representative: Buckley, Guy Julian

(57) **Abstract**

Systems and methods are provided for acquiring data from an aircraft (12). The system (10) comprises a sensor device (20) coupled to the aircraft (12) for generating the data, a first wireless communication interface (24) coupled to the sensor device (20) and configured to transmit the data upon receiving a first request, and a portable electronic device (26) comprising a second wireless communication interface (54). The portable electronic device (26) is configured to transmit the first request to the first wireless communication interface (24) and receive the data from the first wireless communication interface (24).

## Description

### TECHNICAL FIELD

The present invention generally relates to aircraft maintenance and diagnostic systems, and more particularly relates to a system and method for acquiring data from an aircraft.

### BACKGROUND

Aircraft systems, such as the engine controller, the navigation system, and the hydraulic system, often include one or more sensors for generating diagnostic and/or operational data. This data provides valuable information regarding the operation of the aircraft system. For example, an aircraft engine controller may include one or more sensors that collect data regarding the fuel supply to the engines, the flow of air through the engines, the temperature of the engines, and/or other operational parameters. Aircraft flight or maintenance personnel may use this data to detect and address operational issues with the aircraft.

An issue that arises with such aircraft systems is how to deliver the sensor data to flight and maintenance personnel. One method for extracting the data involves physically coupling an electronic device such as a laptop or a personal digital assistant (PDA) to a port to download the sensor data. Further, in another case a built-in console is provided that may be used by flight and maintenance personnel to acquire the sensor data. While these methods of acquiring sensor data are effective, they require flight or maintenance personnel to be at a fixed location (e.g., either in front of the built-in console or next to an electronic device that is physically coupled to the sensor device). Thus, flight and maintenance personnel must go to the fixed location each time they wish to obtain information regarding the sensor data, which can be very time consuming and inconvenient.

Accordingly, it is desirable to provide a system for acquiring data from an aircraft that does not require flight or maintenance personnel to be at a fixed location. Furthermore, other desirable features and characteristics of the present invention will become apparent from the subsequent detailed description of the invention and the appended claims, taken in conjunction with the accompanying drawings and this background of the invention.

### BRIEF SUMMARY

In one embodiment, a system is provided for acquiring data from an aircraft. The system comprises a sensor device coupled to the aircraft for generating the data, a first wireless communication interface coupled to the sensor device and configured to transmit the data upon receiving a first request, and a portable electronic device comprising a second wireless communication interface. The portable electronic device is configured to transmit the first request to the first wireless communication interface and receive the data from the first wireless communication interface.

In another embodiment, a method is provided for acquiring data describing the operation of an aircraft engine controller, wherein the aircraft engine controller is coupled to a sensor device that collects the data. The method comprises transmitting a request for the data to a wireless communication interface that is coupled to the sensor device, receiving the data from the wireless communication interface, and analyzing the data to determine if one or more operational parameters of the aircraft engine controller is not within a predetermined range.

### BRIEF DESCRIPTION OF THE DRAWINGS

The present invention will hereinafter be described in conjunction with the following drawing figures, wherein like numerals denote like elements, and

FIG. 1 is a block diagram of a system for remotely acquiring data from an aircraft system; and

FIG.2 is a method for remotely acquiring data from an aircraft system using the system of FIG. 1.

### DETAILED DESCRIPTION

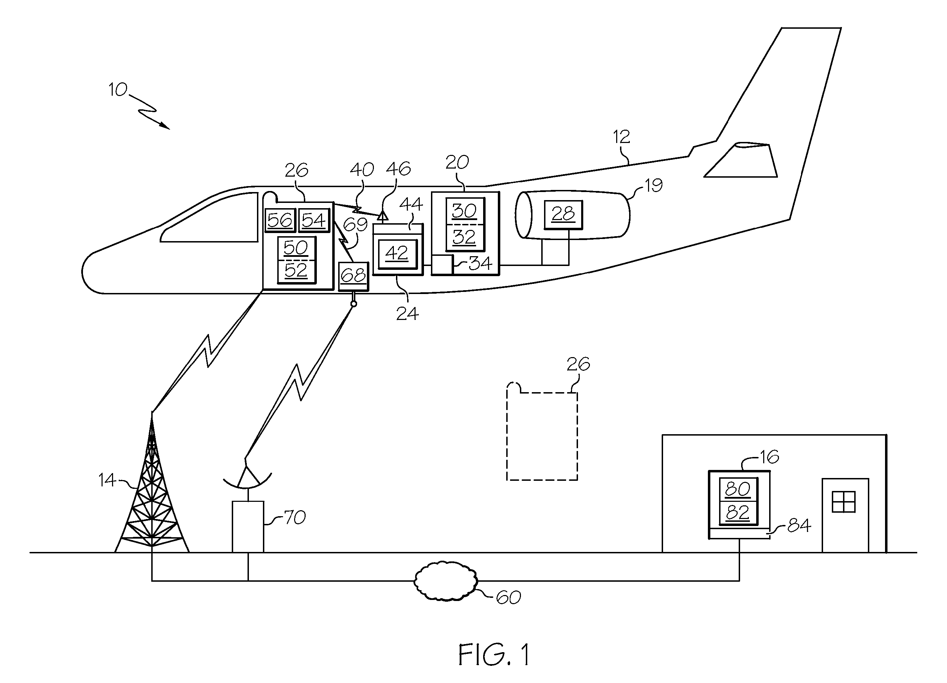

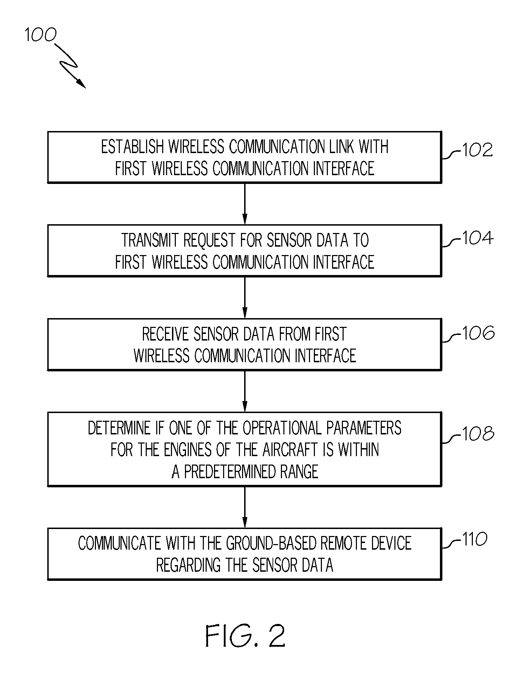

The following detailed description is merely exemplary in nature and is not intended to limit the invention or the application and uses of the invention. Furthermore, there is no intention to be bound by any theory presented in the preceding background or the following detailed description. It should also be understood that FIGS. 1 and 2 are merely illustrative and, particularly with respect to FIG. 1, may not be drawn to scale.

FIG. 1 is a block diagram of an exemplary system 10 for remotely acquiring data for an aircraft 12. As depicted, system 10 includes an aircraft 12, a cellular base-station 14, and a remote device 16. The aircraft 12 includes at least one engine 19, an engine controller 20, and a first wireless communication interface 24. In addition, the first wireless communication interface 24 is in wireless communication with a portable electronic device 26.

The engine 19, as is commonly known, provides a propulsive force that causes the aircraft 12 to move forward. The engine controller 20 is coupled to the engine 19 and controls its overall operation by, for example, controlling the fuel flow rate to the engine 19, as well as controlling airflow through the engine 19. In addition, the engine controller 20 senses one or more operational parameters of the engine 19, such as the fuel flow, airflow, or temperature, utilizing at least one sensor 28 that is disposed on the engine 19 and configured to generate data (e.g., sensor data) regarding its operation. Sensor 28 may be any one of numerous types of sensors including a pressure sensor, a temperature sensor, a vibration sensor, a proximity sensor, a position sensor, and/or a combination of two or more of these.

In the depicted embodiment, the engine controller 20 includes a processor 30, memory 32, and a data interface 34. As used herein, the term "processor" may refer to any processing unit or combination of circuitry that is capable of performing the operations described below, including a programmable logic control system (PLC), a microprocessor, hard-wired state machine, or an application-specific integrated circuit (ASIC). In addition, the term "memory" may refer to electronic memory (e.g., RAM, ROM, or another form of electronic memory) that stores data and/or instructions in any format. Processor 30 controls the operation of the engine 19 based on command inputs from the pilot or co-pilot of the aircraft 12, the sensor data, and other input parameters. In some embodiments, processor 30 may store the sensor data in memory 32. The data interface 34 enables electronic devices, such as the first wireless communication interface 24 as further described below, to retrieve the sensor data by communicating with processor 30. In one embodiment, the data interface 34 may be a port or interface (such as a serial interface) that is exposed on the engine controller 20 for accessing the sensor data. However, the data interface 34 may comprise any interface or data access point that that may be accessed by an electronic device in order to acquire the sensor data, including a system or data bus.

Although the depicted embodiment is described with regard to an engine controller 20 that senses various operational parameters of the engine 19, it will be understood by one who is skilled in the art that embodiments of the present invention may be used to acquire data from other sensor devices. For example, alternative embodiments of the present inventions may be utilized to acquire data that is generated by the navigation system, hydraulic system, electrical system, or any other system of the aircraft that is configured with one or more sensors for generating data regarding its operational state and an interface for acquiring the sensor data.

The first wireless communication interface 24 is coupled to the data interface 34 of engine controller 20. For example, in the case where the data interface 34 is a port (e.g., a serial port or interface) the first wireless communication interface 24 may be coupled directly to the port. However, the first wireless communication interface 24 may also be hard-wired to a system (or data) bus or any other data interface 34 exposed by the engine controller 20 and suitable for communicating with processor 30 to obtain the sensor data. In one embodiment, the first wireless communication interface 24 includes a processor 42 and a wireless transceiver 44 having a wireless antenna 46 for transmitting and receiving data. Processor 42 receives a request for the sensor data from the portable electronic device 26 and provides this request to processor 30 via the data interface 34. In response, processor 30 transmits the appropriate sensor data to processor 42 via the data interface 34. Processor 42 then transmits the sensor data to the portable electronic device 26 via the wireless communication link 40.

In one embodiment, wireless communication link 40 is established using the Bluetooth^{™} wireless communication protocol. In this case, processor 42 includes a Bluetooth^{™} chipset. For example, in the case where the data interface 34 comprises a serial port or interface, the first wireless communication interface 24 may be a Bluetooth^{™} serial port adapter that communicates over the wireless communication link 40 to a Bluetooth^{™} chipset on the portable electronic device 26. However, it will be understood by one who is skilled in the art that other wireless communication technologies may also be used to establish wireless communication link 40, including the IEEE 802 family of standards and ultra-wideband wireless technologies.

The portable electronic device 26 may be a laptop, a PDA, a cell phone, or any other portable electronic device that may be carried by flight and maintenance personnel. In the depicted embodiment, the portable electronic device 26 is positioned within the aircraft 12 (e.g., for use by flight personnel moving within the aircraft). However, the portable electronic device 26 (represented in phantom lines) may also be positioned on the outside of the aircraft 12 (e.g., for use by maintenance personnel when the aircraft 12 is on the ground). In either case, the portable electronic device 26 is not permanently coupled to the aircraft 12. In the depicted embodiment, the portable electronic device 26 is a PDA having a processor 50, memory 52, a second wireless communication interface 54 for transmitting and receiving data, and a cellular interface 56. In addition, the portable electronic device 26 may include a non-illustrated electronic display and user interface. As further described below, processor 50 establishes wireless communication link 40 with the first wireless communication interface 24 and transmits a request for the sensor data. Processor 50 then receives the sensor data from the first wireless communication interface 24 via wireless communication link 40. In addition, in some embodiments processor 50 analyzes the sensor data to detect whether one or more operational parameters for the engine 19 are within a predetermined range of expected values. Processor 50 is also configured to communicate with the remote device 16 as further described below.

The cellular interface 56 enables the portable electronic device 26 to communicate with the remote device 16 via a cellular network that is coupled to a terrestrial data network 60. In the depicted embodiment, processor 50 directs the cellular interface 56 to transmit data to cellular base-station 14 and cellular base-station 14 communicates with a terrestrial data network 60 to provide the data to the remote device 16. The remote device 16 transmits data to the portable electronic device 26 in substantially the same manner. In one embodiment, the cellular network is a GSM communication network that uses a GPRS service for transmitting data to the remote device 16.

It should be noted that other methods for providing communication between the portable electronic device 26 and the remote device 16 may also be utilized. For example, the portable electronic device 26 may communicate with an aircraft communication system 68 via a short range communication network 69 (e.g., Bluetooth, ultra-wideband, or IEEE 802.11). The aircraft communication system 68 may then forward the data to the cellular base-station 14 via a cellular network or an alternative ground-based data reception station 70 via a VHF or HF data link, a SATCOM data link, or another suitable air-to-ground data communication technology. The alternative ground-based data reception station 70 is also coupled to the terrestrial data network 60 for communication with the remote device 16.

The remote device 16 may be any electronic device, such as laptop or desktop computer or an HTTP server that is located at a secure location, such as an FAA operations center or a location that is controlled by the operator of the aircraft 12 or a third-party service provider. The remote device 16 communicates with the portable electronic device 26 via an air-to-ground data network (e.g., the cellular network described above) and a terrestrial data network 60. As depicted, the remote device 16 includes a processor 80, memory 82, and a network interface 84 for receiving and transmitting data over the terrestrial data network 60. Processor 80 may be configured to further analyze sensor data that it receives from the portable electronic device 26. In addition, the processor 80 may transmit information to the portable electronic device 26 describing actions that should be taken to address the operational issue or enable real-time enable real-time audio, video, or data communication with the flight or maintenance personnel.

FIG. 2 is a depiction of an exemplary method 100 for acquiring data from an aircraft using system 10 of FIG. 1. With reference to FIGS. 1 and 2, during step 102 the portable electronic device 26 establishes the wireless communication link 40 with the first wireless communication interface 24. As described above, wireless communication link 40 may be established using wireless communication technologies, such as Bluetooth, ultra-wideband, or IEEE 802.11. During step 102, processor 50 and processor 42 may perform operations that cause the portable electronic device 26 and the first wireless communication interface 24 to authenticate each other's identity, exchange cryptographic keys, and/or perform handshaking procedures such as negotiating the size of the communication packets that will be transmitted between the devices.

After the wireless communication link 40 is established, processor 50 for the portable electronic device 26 transmits a request for the sensor data to the first wireless communication interface 24 (step 104). Processor 50 may be configured to transmit the request periodically (e.g., once every 2 minutes) or as the result of a user input. Processor 42 forwards the request to processor 30 for the engine controller 20 via the data interface 34. In response, processor 30 provides the appropriate sensor data to the first wireless communication interface 24 and processor 42 transmits the sensor data to the portable electronic device 26 via wireless communication link 40. The data is received by the portable electronic device 26 (step 106).

In one embodiment, processor 30 provides all of the sensor data that is stored in memory 32 to the first wireless communication interface 24 in response to the request. Alternatively, processor 30 may provide only a predetermined amount of sensor data (e.g., either from memory 32 or as it is generated), as may be agreed upon during the creation of wireless communication link 40. Alternatively still, processor 30 may continuously transmit sensor data until processor 50 of the portable electronic device 26 transmits a request to stop transmitting sensor data to the first wireless communication interface 24 or until wireless communication link 40 is terminated.

Processor 50 of the portable electronic device 26 analyzes the sensor data to determine whether one or more operational parameters for the engine 19 is within a predetermined range (step 108). The predetermined range may include values that would be expected for the operational parameter during normal operation of the engine 19. For example, during step 108 processor 50 may detect a temperature for the engine 19 based on the sensor data. Processor 50 then compares the detected temperature to a predetermined range of expected temperatures that are stored in memory 52. If the engine temperature is not within the predetermined range, processor 50 may notify the user of the portable electronic device 26 (e.g., via an audible alarm or a message on the non-illustrated display) of a possible operational issue with the engine 19. Processor 50 may also provide additional information to the flight or maintenance personnel instructing as to what actions should be taken to address the operational issue.

In an alternative embodiment, processor 50 may transmit the sensor data directly to the remote device 16 without analyzing it first. In this case, remote device 16 may analyze the sensor data and/or communicate with processor 50 regarding the sensor data as further described below.

In addition, processor 50 communicates with the remote device 16 regarding the sensor data (step 110). For example, if processor 50 determines that one of the operational parameters for the engine 19 is not within the predetermined range it may transmit a message comprising the sensor data to the remote device 16 using one of the methods described above. The remote device 16 may perform additional analysis on the sensor data and/or transmit messages to the portable electronic device 26 to recommend actions that should be taken to address the operational issue. Alternatively, processor 50 may periodically transmit all of the sensor data that it has received from the first wireless communication interface 24 to the remote device 16.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A system (10) for acquiring data from an aircraft (12), the system (10) comprising:
a sensor device (20) coupled to the aircraft (12) for generating the data;
a first wireless communication interface (24) coupled to the sensor device (20) and configured to transmit the data upon receiving a first request; and
a portable electronic device (26) comprising a second wireless communication interface (54) configured to:
transmit the first request to the first wireless communication interface (24); and
receive the data from the first wireless communication interface (24).

2. The system (10) of Claim 1, wherein the sensor device (20) comprises a first processor (30) that receives the first request from the first wireless communication interface (24) and provides the appropriate data to the first wireless communication interface (24) in response.

3. The system (10) of Claim 2, wherein the sensor device (20) comprises an aircraft engine controller (20).

4. The system (10) of Claim 2, wherein the first wireless communication interface (24) and the portable electronic device (26) communicate using the Bluetooth^{™} wireless communication protocol.

5. The system (10) of Claim 4, wherein the sensor device (20) further comprises a serial interface (34) for communicating with the first processor (30) and the first wireless communication interface (24) comprises a serial-to-Bluetooth^{™} adaptor.

6. The system (10) of Claim 2, wherein the first wireless communication interface (24) and the portable electronic device (26) communicate using an ultra-wideband wireless communication technology.

7. The system (10) of claim 2, wherein the portable electronic device (26) further comprises a second processor (50) that is configured to analyze the data to determine if an operational parameter of the aircraft (12) is within a predetermined range.

8. A system (10) for remotely acquiring data describing the operation of an aircraft (12), the system (10) comprising:
an engine controller (20) coupled to the aircraft (12) and configured to sense at least one operational parameter of the aircraft(12), the engine controller (20) having a first processor (30);
a first wireless communication interface (24) coupled to the engine controller (20) and configured to:
receive a request for the data via a wireless communication link (40);
receive the appropriate data from the first processor (30) in response to the request; and
transmit the data over the wireless communication link (40); and
a portable electronic device (26) comprising a second wireless communication interface (54) and configured to:
establish the wireless communication link (40) with the first wireless communication interface (24);
transmit the request to the first wireless communication interface (24); and
receive the data from the first wireless communication interface (24).

9. The system (12) of Claim 8 , wherein the portable electronic device (26) is further configured to communicate with a remote device (16).

10. A method (100) for acquiring data describing the operation of an aircraft engine controller (20), the aircraft engine controller (20) configured to collect the data from at least one sensor (28), the method (100) comprising:
transmitting a request for the data to a wireless communication interface (24) that is coupled to the aircraft engine controller (20);
receiving the data from the wireless communication interface (24); and
analyzing the data to determine if one or more operational parameters is within a predetermined range.
